# EUROPEAN PATENT APPLICATION

(11) **EP 4 012 543 A1**
(43) Date of publication of application: **15.06.2022**
(21) Application number: 20213677.6
(22) Date of filing: 14.12.2020
(51) Int. Cl.: G06F 3/0488, G06F 3/044

(54) **ELECTRONIC DEVICE AND METHOD FOR ENHANCED INTERFACE OPERATION**

(71) Applicant: Siemens Aktiengesellschaft, 80333 München (DE)
(72) Inventor: Diegel, Jeannie, 96146 Altendorf (DE)

(57) **Abstract**

The invention relates to an electronic device and to a method for enhanced interface operations on the electronic device. This electronic device and method provide improved interface operation like one-handed control or fast access control for selectable functions or features, particularly standard device specific regulation operations. The electronic device comprises components like touch-sensitive display (dis), storage unit, processor unit, display control unit comprising display control software component enabling the interaction between processor unit and touch-sensitive display (dis) comprising the detection of user's touch operations (1,2) wherein the detection distinguishes different kinds of touch operations (1,2) including at least a touch gesture and wherein the detection of a specifiable user's touch operation (1,2) within a function area (fa1-fa4) of the touch-sensitive display (dis) triggers a performance of an assigned function by the processor unit.

## Description

The invention relates to an electronic device and to a method for enhanced interface operations on the electronic device.

Up to now, electronic devices are known with touch-sensitive displays. Especially in the sector of handheld devices, a lot of efforts are made to improve and simplify the operation of the devices. The operation of an electronic device by touch-sensitive display user interface comprises selection of displayed tasks and using text input fields by tapping, for example with a single finger or pointer, or by swiping gestures on the display surface. Known approaches for one-handed interface control rely on consecutive single touch actions. That means, that multiple swipes are necessary to achieve a certain operation control.

Device standard regulation operations typically still rely on hardware buttons additional to the display operations.

Accordingly, it is an object to further improve and simplify the operation of handheld devices, in particular for one-handed operation.

This object is achieved by the features of the independent claims. Advantageous embodiments emerge from the dependent claims.

According to a first aspect of the invention, an electronic device with touch-sensitive display operation control is provided, which comprises the following components: At least one touch-sensitive display, at least one storage unit, at least one processor unit, and one display control unit comprising a display control software component, which enables the interaction between processor unit and touch-sensitive display, comprising the detection of user's touch operations, wherein the detection distinguishes different kinds of touch operations including at least a touch gesture and wherein the detection of a specifiable user's touch operation within a function area of the touch-sensitive display triggers a performance of an assigned function by the processor unit.

This means that there is at least one specifiable function which overlays any current function running on the device, which performance is triggered with a single touch operation. One of the benefits is, that without necessary activation by hardware buttons, less buttons on hardware lead to easier manufacturing processes. Further, with avoiding a plurality of consecutive gestures for adjustments, the one-handed use of the device gets more convenient.

The touch-sensitive display in this case is representing an input-output-subsystem for providing graphical user interface.

The input-output subsystem is optionally further comprising other I/O-components like speakers and microphone, camera or motion sensor.

As used herein, the term "touch" refers, for example, to a sensor-detectable contact of a finger or touch stick to the display surface. As used herein, the term "touch gesture" refers, for example, to a continually sliding touch, characterized by an origin point, an end point, a distance, a route and/or direction, a slide velocity and/or hence duration, wherein the term "continually" means without interruption of the touch, one single touch event.

The processor unit controls the overall operation of the device. The processor unit is further interacting with the display control unit. The electronic device is comprising an operating system and software programs like apps, that can be executed by the processor unit and that are preferably stored in the storage unit, for example a memory.

According to a further aspect of the invention, an embodiment of the electronic device comprises a display control unit, wherein the assigned function is overlying the current application. As used herein, the term "current application" meaning the application currently performed as visible to the user on the display. As used herein, the term "Overlying" refers, for example, to overruling, meaning, movements on the current application are not functional from the point in time where the specific user's single touch operation within a function area has started until it has ended. This functionality of overruling is of special benefit for device specific adjustments, independent of the current application, like screen brightness or volume.

According to an alternative aspect of the invention, an embodiment of the electronic device comprises a display control unit, wherein the assigned function is integrated to the current application. As used herein, the term "integrated" is meaning, for example, being part of the application software, e.g. selection function on a website.

According to another aspect of the invention, an embodiment of the electronic device comprises a display control unit, wherein the specifiable user's touch operation within the function area of the touch-sensitive display comprises an entering move to the display which instantaneously triggers the performance of the assigned function. The term "entering move" meaning beginning outside the display and entering the touch-sensitive function area from the display.

According to the beforementioned aspect of the invention, the function area of the device is located at the edge of the display. The edge positioning is of special benefit for initiating overlaying functions by an edge-crossing touch movement like the beforementioned entering move.

Particularly, using the function areas closest to the body of the user, there is a special benefit for thumb control of the device. Concerning usage of mobile phones and smart phones, an ergonomic thumb control would use the lower function areas in the upright position of the display. For ergonomically using a tablet oder smart phone in horizontal position of the display by thumb control, different function areas would be employed.

According to another aspect of the invention, the electronic device comprises a function area that measures between 1 and 20 cm², for example between 2 and 15 cm², preferably between 4 and 12 cm². This embodiment enables one-handed operation for the standard human hand size.

An exemplary embodiment of the electronic device is designed with a rectangular-shaped, square-shaped or segment-shaped function, that is preferably located in a corner of the display.

Smart phone devices usually comprise displays with a height between 10 cm and 16 cm, preferably around 14 cm. A function area could have a height of about 4 cm, preferably between 2 cm and 6 cm and could have a width of about 3.5 cm, preferably between 1.5 cm and 5 cm. Half the width of the smart phone device limits the width of the function area.

An overlap of several function areas is possible, if a selection of function areas is provided, e.g. for right-hand or left-hand use.

Tablet devices usually comprise displays with a height between 12 cm and 25 cm, preferably around 20 cm. A function area could have a height of about 6 cm, preferably between 2 cm and 9 cm and could have a width of about 5 cm, preferably between 2 cm and 8 cm. Half the height of the tablet device limits the height of the function area. The average length of a human thumb (between 6 and 8 cm) specifies the overall size of the function area, but does not limit it, due to the possibility of performing the swiping function with any other digit.

According to the beforementioned aspect of the invention, the touch-sensitive display comprises touch sensors and underlying a function area, the touch sensors are arranged according to the shape of the function area. Within a preferably quarter circle shaped function area, the sensing diodes can be arranged in several concentric quarter circles. Alternatively, the sensors are arranged in a rectangular grid pattern but the conductive tracks approach quarter circles. Electrodes and/or conductor routes, adjusted to the gestures to be expected in the function area, improve reliability of the detection.

Basically, touch-sensitive displays are based on touch-sensitive sensors arranged in a grid pattern, rectangular grid pattern or diagonal grid pattern with horizontal and vertical conductive tracks or multiplexed diagonal lattice touch screen with diagonal conductor routes. According to the beforementioned aspect of the invention, in an embodiment of the touch-sensitive display, the touch sensors are arranged underlying a segment-shaped function area in concentric circle segments around a center positioned in or near a corner of the display. The term "near" herein meaning the center is within 2 cm distance of a corner of a standard up-to-date electronic rectangular shaped display.

The touch-sensitive display basically comprises touch sensors and these touch sensors can comprise capacitive electrodes, especially transmission electrodes and receive electrodes.

In an exemplary embodiment of the electronic device according to the invention, the triggered assigned function is displayed on the device. The term "displayed" meaning a user feedback is given or a further selection or adjustment possibility is provided. The adjustment selection can be displayed, e.g. as long as the sliding touch continuous. But the adjustment selection can alternatively be hidden, not displayed respectively. Such an underlying selection is of special benefit e.g. for standard adjustments like screen brightness, volume or zoom. The adjustment feedback in this case is directly hearable or visible to a user. Alternatively, a haptic response like vibration can be implemented instead of display feedback.

In another exemplary embodiment of the electronic device according to the invention, the assigned function can be a selectable feature within a performed app or website or is predetermined by user, app or website.

According to a further aspect, a computer-implemented method for touch-sensitive display operation control is provided, comprising the measures: enabling interaction between a processor unit and a touch-sensitive display, comprising detection of user's touch operations, wherein the detection distinguishes different kinds of touch operations including at least a touch gesture and wherein the detection of a specifiable user's touch operation within a function area of the touch-sensitive display triggers a performance of an assigned function by the processor unit.
This electronic device and method provide improved interface operation like one-handed control or fast access control for selectable functions or features, particularly standard device specific regulation operations.

According to a further aspect, a computer program product is provided, comprising instructions which, when the program is executed by a computer, cause the computer to carry out the steps of the beforementioned computer-implemented method for touch-sensitive display operation control. According to a further aspect, a provision apparatus for the beforementioned computer program product is provided, wherein the provision apparatus stores and/or provides the computer program product.

The provision apparatus can be a data storage saving and/or providing the computer program product. Alternatively, the providing apparatus can be a computer system and/or a server system and/or a network and/or a cloud-based computer system and/or virtual computer system. The providing apparatus saves and/or provides the computer program product. Preferably, the complete computer program product is provided by said providing apparatus in the form of a download, for example, as a file or a data stream. Alternatively, the computer program product is provided by at least two partial downloads, for example, provided by a peer to peer network, each containing a piece of said computer program product. For example, such a computer program product can be provided by a data storage, which is read and executed by a computer system. As a consequence, the computer system is able to execute the disclosed method. Alternatively, and/or additionally, the computer program configures a manufacturing device as above mentioned.

A data storage or computer-readable medium can be electronic, magnetic, optical, or a semiconductor system (or apparatus or device). Examples of a computer-readable medium include, but are not limited to, a semiconductor or solid state memory, magnetic tape, a removable computer diskette, a random access memory (RAM), a read-only memory (ROM), a rigid magnetic disk, an optical disk, etc. Current examples of optical disks include compact disk-read only memory (CD-ROM), compact disk-read/write (CD-R/W) and digital versatile disk (DVD).

Alternatively and/or additionally, the provision apparatus is a network service, a computer system, a server system, particularly a distributed computer system, a cloud-based computer system and/or a virtual computer system that stores and/or provides the computer program product preferably in the form of a data stream, for example. This provision is effected as a download in the form of a program data block and/or instruction data block, preferably as a file, particularly as a download file, or a data stream, particularly as a download data stream, of the complete computer program product, for example. This provision can alternatively be effected as a partial download that consists of multiple parts and is downloaded particularly via a peer-to-peer network or provided as a data stream, for example. Such a computer program product is read in, for example using the provision apparatus in the form of the data storage medium, in a system and executes the program instructions, so that the method according to the invention is executed on a computer, or configures the creation device such that it creates cited system and/or execution unit according to the invention.

Preferably, the presented embodiments are implemented by a processor and/or a memory device unless otherwise noted.

In detail, to implement and/or execute the invention, the inventive method, components, devices etc. comprise at least one processor and/or at least one memory device unless otherwise noted. Additionally, the inventive method, components, devices etc. comprise, for example, other features known by a skilled person. For example, these features can be further input units, like a microphone, an accelerometer or a camera.

In another preferred variant of the invention, a processor is specifically configured to execute the computer readable instructions such that said processor is preferably configured to perform functions which implement a step/all steps of the inventive method.

Further definitions:
Unless specifically stated otherwise, as apparent from the following discussions, it is appreciated that throughout the specification discussions utilizing terms such as "processing", "computing", "computer-based", "calculating", "determining", "generating", "configuring" or the like, refer to the action and/or processes of a computational device that manipulates and/or transforms data into other data, said data represented as physical, e.g. such as electronic, quantities.

The term "computational device" should be expansively construed to cover any kind of electronic device with data processing capabilities, including, by way of non-limiting example, personal computers, servers, handheld computer systems, Pocket PC devices, Cellular communication device and other communication devices with computing capabilities, processors and other electronic computing devices.

As used herein, the term "processor" refers, for example, to controllers, microcontrollers (e.g. digital signal processor (DSP) possibly in combination with memory and storage units memory unit storing computer-readable instructions, application specific integrated circuit "ASIC", etc.), processor cores, central processing units, integrated circuits/processing circuitry (e.g. application specific integrated circuit "ASIC", field programmable gate arrays "FPGA" etc.) or digital signal processors. Furthermore, the term "processor" can, for example, refer to virtual processors, virtual CPUs, soft processors or soft CPUs. Moreover, said processor can, for example, be configured to execute computer readable instructions such that said processor is preferably configured to perform functions which implement the invention.

As used herein, the term "component" refers, for example, to a processor and/or a memory unit storing computer-readable instructions. For example, the processor is specifically configured to execute the computer readable instructions such that said processor is preferably configured to perform functions which implement the invention, such as a step of the inventive method. Furthermore, the term "component" can, for example, refer to means (e.g., a processor) which are configured to implement/execute functions/steps of the invention. In the following, possible embodiments of the different aspects of the present disclosure are described in more detail with reference to the enclosed figures.

The accompanying drawings are intended to provide a better understanding of the embodiments. They show embodiments and serve in conjunction with the description to explain principles and concepts of the disclosed subject matter. Other embodiments and many of the cited advantages will emerge in respect of the drawings. The elements of the drawings are not necessarily shown in scale with one another. Identical reference characters here designate identical components or components of comparable effect.

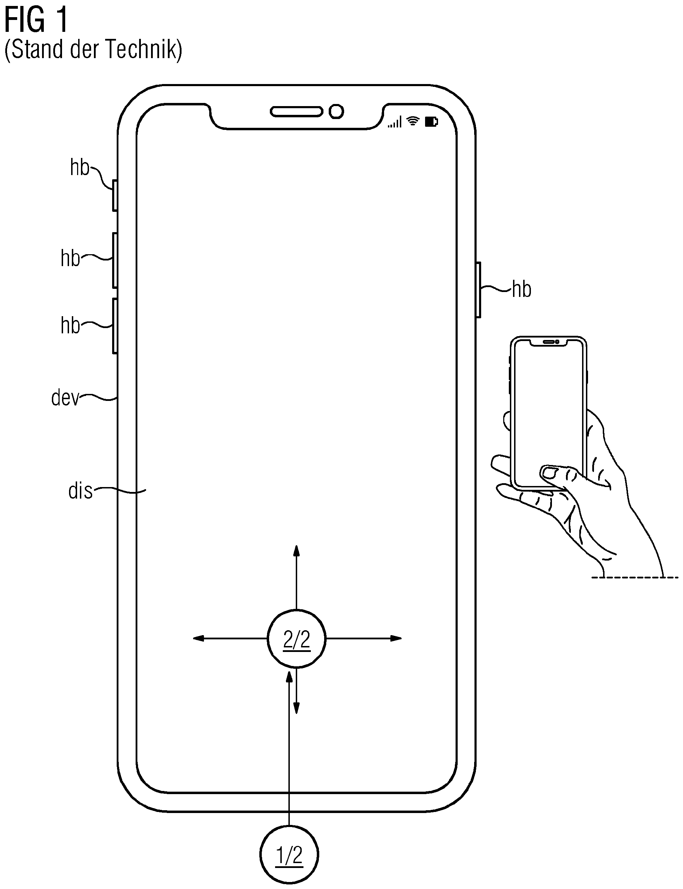

The properties, features and advantages of this invention that are described above and the manner in which they are achieved will become clearer and more distinctly comprehensible in conjunction with the description of the exemplary embodiments that follows, these being explained in more detail in conjunction with the figures 1 to 6, in a schematic depiction:
- Figure 1: shows a state of the art device.
- Figures 2 - 6: show schematic diagrams of exemplary embodiments of electronic devices with function areas fa1-4.

As shown by Figure 1, a state of the art handheld device, dev, still provides hardware buttons, hb, additional to the touch display, dis, operations, particularly for standard regulation operations like screen brightness, volume or mute function. For one-handed control by touch-sensitive display interface, the device, dev, for example requires consecutive single touch actions: First, an activating action 1/2 followed by an executing action 2/2. That means, that multiple swipes are necessary to achieve a certain operation control.

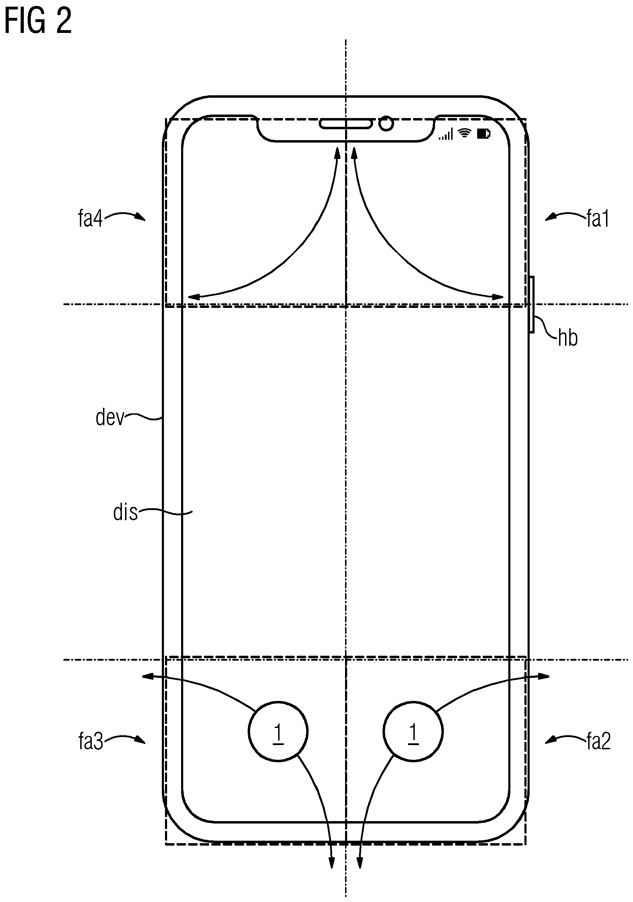

Figure 2 shows a handheld device, dev, according to an embodiment of the invention with a display control unit. The standard height of smart phones for example is about 14 cm, particularly between 12 cm and 15 cm. Their function area would be preferably between 2 cm and 6 cm of width and/or height, particularly between 3 cm and 5 cm. The function areas, fa1-4, are preferably arranged side by side. In case of smaller devices, an overlapping area could be realized, if the overlaying functions are prioritized or not active at the same time.

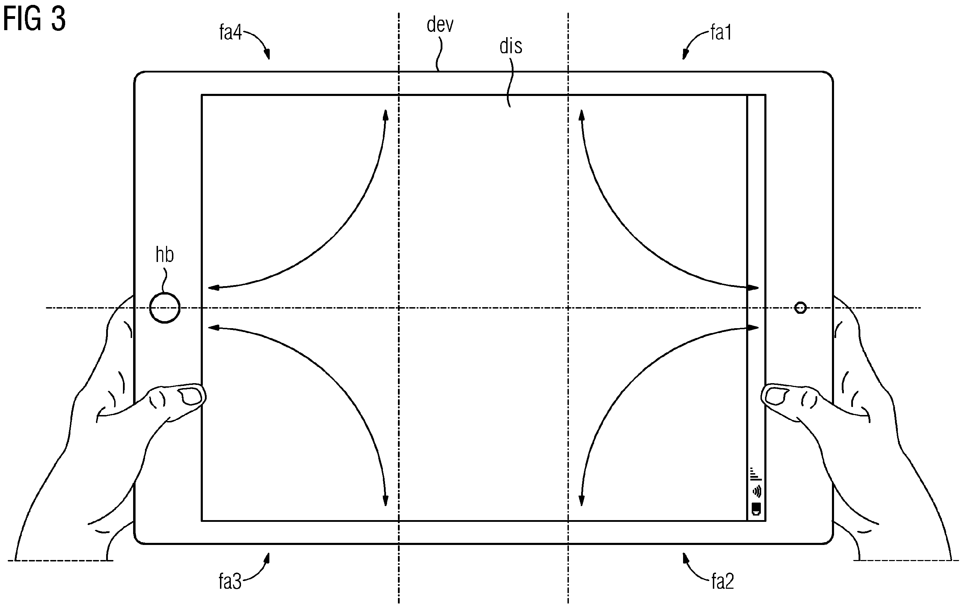

Figure 3 shows a tablet device. In this case, it is not the display size that limits the size of the function area but the human hand size. Since the human thumb measures between 6 cm and 8 cm long, any function area, fa1-4, should be adapted to that magnitude. In the case of rectangular-shaped or square-shaped function areas, these have side lengths between 1 cm and 10 cm, preferably between 2 cm and 8 cm. Preferably, the function areas, fa1-4, do not overlap with each other and are arranged in the corners of the display.

Depending on the device, dev, and the display size as well as the device control in upright or horizontal position of the display, dis, different function areas, fa1-4, are employed with most frequently used regulation functions. In the case of mobile phones or smart phones and an ergonomic one-handed thumb control in the upright position of the display, dis, compare figures 1 and 2, the lower function areas fa 2 and fa3 are closest to the user and therefore employed with the most important functions. For ergonomically using a tablet or smart phone in horizontal position by thumb control, either function areas fa1 and fa2 or fa3 and fa4 would be closest to the user and therefore employed with the most frequent functions.

Further examples of handheld devices are remote control tools as used in automated systems like production plants. In this case, standard regulation operations could be forward velocity, right-left-regulation or applied force regulation.

In one special embodiment of the invention, a function area provides a touch-pad-feature to the user. This means, that a transmission from a small gesture within a function area to the entire display is realized, similar to a track-pad-control. Particularly, the transmission of the gesture is visualized by a curser. Therefore, the function area optionally comprises a grid of touch sensitive electrodes, that is more closely arranged, particularly with smaller electrodes, than the overall display. This causes the advantage of high convenience in one-hand usage and especially in thumb control. A small gesture of a thumb within a function area, suitably within one of the function areas closer to the user, fa2-3, reaches the entire display with all functionalities offered. The function area in a way is representing a scaled down copy of the entire display.

This touch-pad-feature is preferably combined with a zoom function, that is implemented on the same or another function area. If on the same function area, the zoom function could be the initiating action which is followed by the transmission function. The initiating gesture is followed by further swiping gestures, which swiping gestures are visualized on the display, similar to a track-pad-control. If zoom function and touch-pad-feature are implanted on different function areas, they can be performed independently.

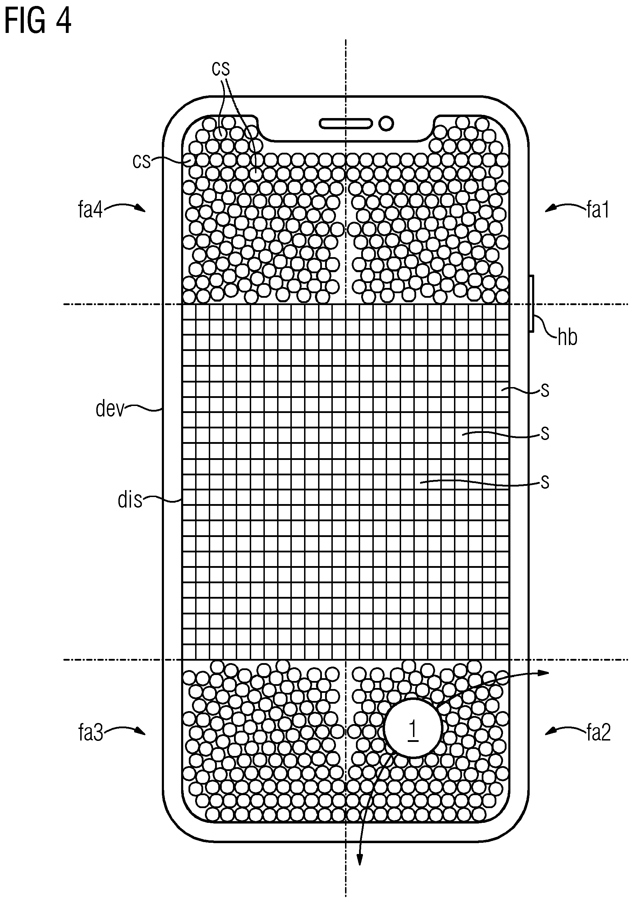

Figure 4 shows a schematic diagram of the touch sensitive sensors beneath the display, the elements not necessarily shown in scale with one another. The function area could be quarter circle shaped. So, the sensor diodes could be arranged in a quarter circle. Alternatively, the sensors are arranged in a grid pattern but the conductive tracks approach quarter circles. In general, the electrodes can be arranged approached to the functions area's shape and/or the conductor routes are adjusted to the gestures to be expected in the function are to improve reliability of the detection.

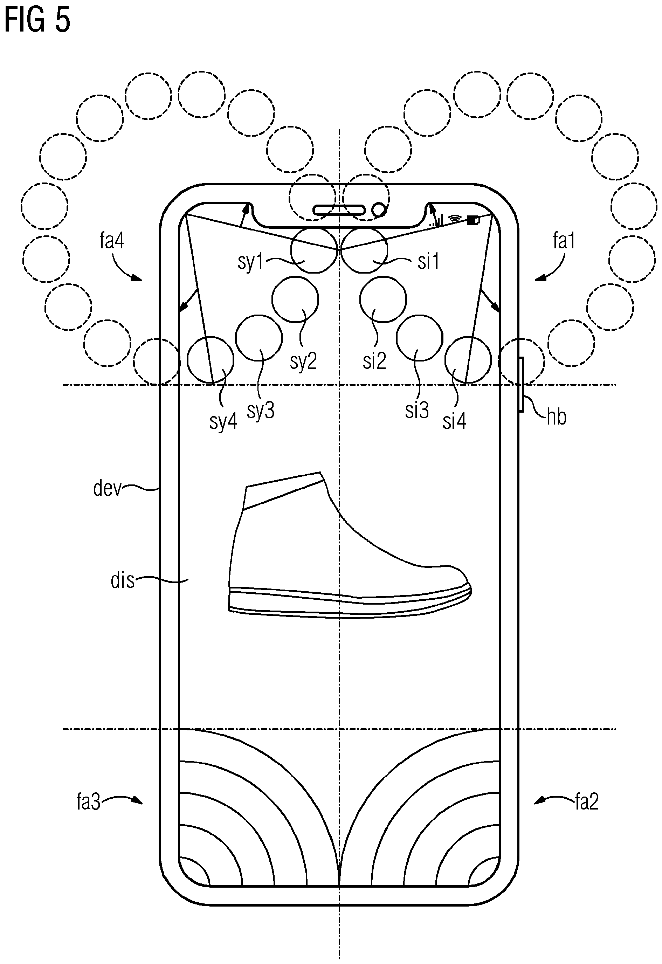

Figure 5 shows an exemplary embodiment a smart device, dev, providing the user with a shopping website. If the device detects that a catalogue offers different selection functions, it links for example the fourth function area, fa4, with the feature of selecting a trademark of a chosen product, the first function area, fa1, with the feature of selecting size of product, that might be shoes.

In general, an application or website uses one or more of the provided function areas, fa1-4, for app or website specific regulations. These regulations are preferably controlled by gestures within the function areas, fa1-4. The standard regulation functions meanwhile can be switched off or sort of blocked by the website or app. Alternatively, the standard regulation function still overrules the website or app functions by applying the initiating gesture, which is the edge crossing gesture (entering move).

The remaining second and third function areas, fa2-3, might still be linked with the standard adjustment features screen brightness, volume or zoom.

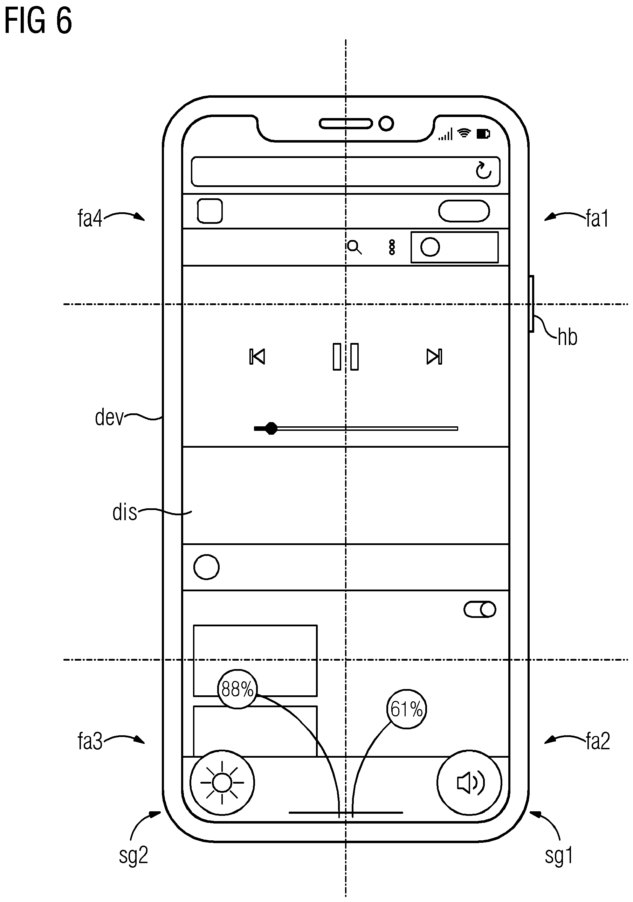

Figure 6 shows an exemplary embodiment a smart device, dev, performing a music app. With the provided device and method, it is possible, to involve artificial intelligence. If the device detects that a music app is running, it links for example the second function are, fa2, with the features of regulating volume, the third function area, fa3, with the feature of "fast forward" or "next song". Only one movement of one finger is needed to adjust the respective feature.

### References

- dev: electronic device
- dis: touch-sensitiv display
- hb: hardware button
- fa: function area
- s: touch sensors (capacitive touch sensors including transmission (drive) electrodes and receive (sense) electrodes)
- cs: concentric arranged sensors
- 1/2, 2/2: consecutive, uninterrupted gestures, like activating 1/2 and executing 2/2
- 1: single gesture executing overlaying function, including activating gesture by edge-crossing move or activating instantaneously by any/first touch to function area fa
- sy1-4: symbol 1 to 4, trademark choice within catalogue or shopping app/website
- si1-4: size 1 to 4, size choice within catalogue or shopping app/website
- sg1, sg2: standard regulations like screen brightness, volume, mute, zoom, font size, etc.

## Claims

1. Electronic device (dev) with touch-sensitive display operation control comprising the components:
- Touch-sensitive display (dis),
- Storage unit,
- Processor unit,
- Display control unit comprising display control software component enabling the interaction between processor unit and touch-sensitive display (dis) comprising the detection of user's touch operations (1,2) wherein the detection distinguishes different kinds of touch operations (1,2) including at least a touch gesture and
- wherein the detection of a specifiable user's touch operation (1,2) within a function area (fa1-fa4) of the touch-sensitive display (dis) triggers a performance of an assigned function by the processor unit.

2. Electronic device (dev) according to Claim 1, wherein the assigned function is overlying the current application.

3. Electronic device (dev) according to Claim 1, wherein the assigned function is integrated to the current application.

4. Electronic device (dev) according to one of the claims 1 to 3, wherein the specifiable user's touch operation (1,2) within the function area (fa1-fa4) of the touch-sensitive display (dis) comprises an entering move to the display which instantaneously performs the assigned function.

5. Electronic device (dev) according to one of the claims 1 to 4, wherein
a function area (fa1-fa4) is located at the edge of the display (dis).

6. Electronic device (dev) according to one of the claims 1 to 5, wherein a function area (fa1-fa4) measures between 1 and 20 cm2, for example between 2 and 15 cm2, preferably between 4 and 12 cm2.

7. Electronic device (dev) according to one of the claims 1 to 6, wherein a function area (fa1-fa4) is designed as rectangular-shaped area, square-shaped area or segment-shaped area, preferably located in a corner of the display (dis).

8. Electronic device (dev) according to claim 7, wherein the touch-sensitive display (dis) comprises touch sensors (s) and underlying a function area (fa1-fa4), the touch sensors (s) are arranged according to the shape of the function area.

9. Electronic device (dev) according to claim 7, wherein the touch sensors (s) are arranged underlying a segment-shaped function area (fa1-fa4) in concentric circle segments (cs) around a center positioned in or near a corner of the display (dis).

10. Electronic device (dev) according to one of the claims 1 to 9, wherein the touch-sensitive display (dis) comprises touch sensors and wherein the touch sensors comprise capacitive electrodes, especially transmission electrodes and receive electrodes.

11. Electronic device (dev) according to one of the claims 1 to 10, wherein the triggered assigned function is displayed on the device.

12. Electronic device (dev) according to one of the claims 1 to 11, wherein the assigned function can be a selectable feature within a performed app or website or is predetermined by user, app or website.

13. Computer-implemented method for touch-sensitive display operation control comprising the measures:
- enabling interaction between a processor unit and a touch-sensitive display (dis) comprising,
- detection of user's touch operations (1,2),
- wherein the detection distinguishes different kinds of touch operations (1,2) including at least a touch gesture and
- wherein the detection of a specifiable user's touch operation (1,2) within a function area (fa1-fa4) of the touch-sensitive display (dis) triggers a performance of an assigned function by the processor unit.

14. A computer program product comprising instructions which, when the program is executed by a computer, cause the computer to carry out the steps of the method of claim 13 and/or of the display control software component according to one of the claims 1 to 12.

15. Provision apparatus for the computer program product according to Claim 14, wherein the provision apparatus stores and/or provides the computer program product.
